(19) **Europäisches Patentamt / European Patent Office / Office européen des brevets**

(11) **EP 3 387 766 B1**

(12) **FASCICULE DE BREVET EUROPEEN**

(45) Date de publication et mention de la délivrance du brevet:
**15.04.2020 Bulletin 2020/16**

(21) Numéro de dépôt: **16808710.4**

(22) Date de dépôt: **12.12.2016**

(51) Int Cl.:
*H04J 3/06* (2006.01)     *H04J 3/16* (2006.01)

(86) Numéro de dépôt international:
**PCT/EP2016/080629**

(87) Numéro de publication internationale:
**WO 2017/098045 (15.06.2017 Gazette 2017/24)**

(54) **PROCÉDÉS ET DISPOSITIFS DE TRANSMISSION DE TRAIN BINAIRE CONTINU DANS UN RÉSEAU NUMÉRIQUE NON SYNCHRONE DU TRAIN BINAIRE**

VERFAHREN UND VORRICHTUNGEN ZUM SENDEN EINES KONTINUIERLICHEN BITSTROMS IN EINEM NICHT MIT DEM BITSTROM SYNCHRONEN DIGITALEN NETZWERK

METHODS AND DEVICES FOR TRANSMITTING A CONTINUOUS BIT STREAM IN A DIGITAL NETWORK NON-SYNCHRONOUS WITH THE BIT STREAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.12.2015 FR 1502574**

(43) Date de publication de la demande:
**17.10.2018 Bulletin 2018/42**

(73) Titulaire: **Thales**
**92400 Courbevoie (FR)**

(72) Inventeurs:
• **GRIMONPREZ, Benjamin**
  **49309 Cholet (FR)**
• **RENAUX, Michel**
  **92622 Gennevilliers (FR)**

(74) Mandataire: **Lavoix**
**2, place d'Estienne d'Orves**
**75441 Paris Cedex 09 (FR)**

(56) Documents cités:
**WO-A1-01/41338     US-A- 4 489 421**
**US-A1- 2013 083 809**

**Description**

La présente invention concerne un procédé de numérisation de train binaire continu mis en oeuvre par un équipement émetteur et un procédé de restitution de train binaire mis en oeuvre par un équipement récepteur, faisant partie d'une transmission de train binaire continu, sans signal d'horloge associé, via un réseau numérique non synchrone au train binaire continu.

La présente invention trouve son application pour la transmission entre une source et un destinataire d'un train binaire continu.

L'invention se situe dans le domaine de la transmission numérique dans un domaine d'horloge, de signaux numériques continus d'un autre domaine d'horloge, les deux domaines d'horloge étant non asservis en fréquence

Par ailleurs chacun des domaines d'horloge présente sa propre stabilité en fréquence selon le mode de synchronisation de chacun.

La demande de brevet US2013/083809 A1 décrit des procédés et dispositifs de communications permettant la transmission de signaux entre des équipements terminaux raccordés à des équipements intermédiaires, reliés à un réseau de communications utilisant le protocole Ethernet, les équipements terminaux n'étant pas asservis par une horloge distribuée.

A la numérisation du train binaire, et plus particulièrement dans la mesure numérique du débit par l'équipement récepteur introduit obligatoirement une erreur du fait que la source n'est pas asservie en fréquence sur le récepteur. Dans une transmission en continu, cette erreur génère obligatoirement une altération dans la transmission du train binaire par la perte ou l'ajout d'un ou plusieurs bits.

Cette erreur de numérisation est d'autant importante que l'horloge de numérisation du récepteur est de type plésiochrone, donc présente une tolérance, également appelée gigue, par rapport à une fréquence nominale. De même la source présente également une gigue intrinsèque selon la nature de cette source. Ceci est particulièrement le cas lorsque la source est un équipement qui utilise une horloge restituée et non un oscillateur local (exemple radio restituant l'horloge à partir de sa réception radioélectrique).

Pour traiter ce problème, il est convenu de numériser le train binaire du premier domaine d'horloge par un sur échantillonnage du signal entrant à une fréquence bien supérieure issue du second domaine d'horloge. Cette solution augmente le nombre d'éléments binaires transmis dans le réseau et donc consomme de façon excessive de la bande passante de ce réseau.

Afin de réduire la bande passante, la numérisation d'un train binaire continu consiste à extraire l'horloge propre au train binaire et à échantillonner ledit train binaire en datagrammes à transmettre sur le réseau numérique.

Dans un réseau synchrone, l'extraction de l'horloge propre au train binaire est la mesure de décalage de phase de signal reçu par rapport à une horloge stable du domaine d'horloge du réseau. La mesure de phase étant effectuée à une fréquence élevée, il est ainsi possible d'avoir une mesure de phase précise. Cette mesure est transmise avec les données. Il est alors possible de restituer les données au rythme d'une horloge qui prend en compte la mesure de phase. Cette solution n'est pas compatible d'un réseau plésiochrone, car la stabilité de la phase de l'horloge du réseau en plusieurs endroits du réseau n'est pas garantie.

L'invention a pour but d'éviter la perte de données binaires entre un train binaire émis par une source et le train binaire restitué à un destinataire.

A cet effet, l'invention propose un procédé de numérisation de train binaire continu selon la revendication 1.

Avantageusement, l'insertion dans une trame de transport d'une information permettant de calculer, dans le deuxième équipement, la valeur moyenne de période d'horloge d'émission de la séquence de données, permet de restituer le train binaire initial à la fréquence réelle d'émission dans le deuxième équipement, et par conséquent d'éviter la dérive et la perte de données.

L'invention permet ainsi de restituer un train binaire synchrone sans transmission de signal d'horloge associé au train binaire.

Le procédé de numérisation de train binaire selon l'invention comporte également une ou plusieurs des caractéristiques conformes aux revendications dépendantes 2 à 4.

Selon un autre aspect, l'invention concerne un équipement émetteur d'un système de communication adapté à mettre en œuvre un procédé de numérisation de train binaire continu tel que brièvement décrit ci-dessus.

Selon un autre aspect, l'invention concerne un procédé de restitution de train binaire continu conforme à la revendication 6.

Le procédé de restitution de train binaire selon l'invention comporte également une ou plusieurs des caractéristiques conformes aux revendications dépendantes 7 et 8.

Selon un autre aspect, l'invention concerne un équipement récepteur d'un système de communication adapté à mettre en œuvre un procédé de restitution de train binaire continu tel que brièvement décrit ci-dessus.

D'autres caractéristiques et avantages de l'invention ressortiront de la description qui en est donnée ci-dessous, à titre indicatif et nullement limitatif, en référence aux figures annexées, parmi lesquelles :

- la figure 1 représente un système de communication entre un équipement émetteur et un équipement récepteur selon un mode de réalisation;
- la figure 2 illustre schématiquement un écart de période d'horloge ;
- la figure 3 est un synoptique des principales étapes d'un procédé de transmission selon un mode de réalisation mis en œuvre dans un équipement émetteur ;

- la figure 4 illustre schématiquement un champ utilisateur d'une trame de communication ;
- la figure 5 est un synoptique des principales étapes d'un procédé de restitution selon un mode de réalisation mis en œuvre dans un équipement récepteur ;
- la figure 6 illustre schématiquement une séquence de cycles d'horloge restitués selon un mode de réalisation.

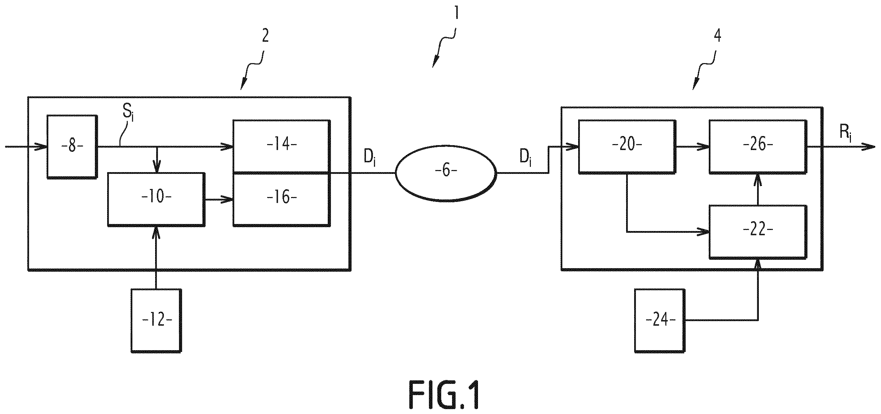

La figure 1 illustre un système de communication dans lequel l'invention trouve une application.

Le système 1 de la figure 1 illustre schématiquement la communication entre un premier équipement émetteur 2 et un deuxième équipement récepteur 4, via un réseau de communications plésiochrone 6.

Il est entendu que l'invention n'est pas limitée à la communication entre deux équipements et s'applique plus généralement dans un réseau dans lequel de multiples équipements sont connectés, et permet d'assurer la restitution précise d'une période d'horloge distante sur un nombre quelconque d'équipements récepteurs.

De plus, l'invention n'est pas non plus limitée à une application dans un réseau plésiochrone.

Le réseau plésiochrone 6 est par exemple un réseau à commutation de paquets de type Ethernet, selon le protocole de communication Ethernet PTP- IEEE 1588.

L'équipement émetteur 2 comprend un module de numérisation 8, apte à générer un train binaire initial $S_i$, avec une fréquence nominale $F_c$ (ou fréquence de consigne) correspondant à une période d'horloge de consigne $T_c$, la période étant la durée d'un cycle du signal d'horloge.

Le train binaire est formaté en séquences de données binaires ou datagrammes, encapsulées dans des trames de transport, par le module 14 de formatage. Ces sont les trames Di qui sont transmises sur le réseau.

Chaque trame comprend une séquence de données à transmettre (également appelées données utilisateur, correspondant au train binaire à transmettre) ainsi que des champs de signalisation. Le formatage d'une trame est défini par le protocole de communication.

Une séquence de données à transmettre comprend n échantillons binaires (ou bits). La séquence est cadencée par le signal d'horloge d'émission, comprenant n cycles d'horloge, la période d'horloge étant la durée moyenne d'un cycle d'horloge, qui est la durée entre deux fronts montants du signal d'horloge.

En théorie, la période d'horloge est constante et égale à une période d'horloge de consigne $T_c$, donc la période d'horloge est égale à la période moyenne pour chaque cycle d'horloge.

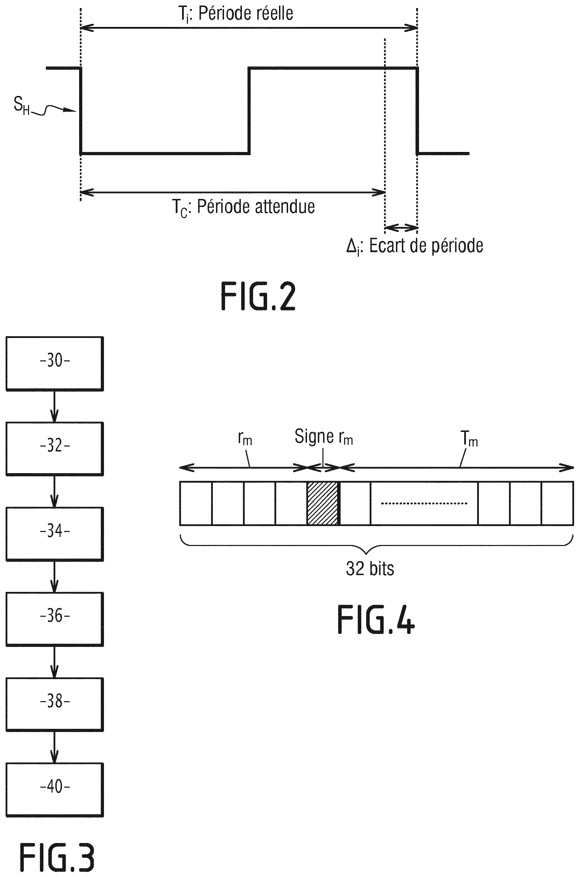

En pratique, on constate de faibles écarts, variables dans le temps, entre la période d'horloge attendue (période d'horloge de consigne) et la période d'horloge d'émission effective, ou période réelle, comme illustré schématiquement à la figure 2.

Sur la figure 2 on a illustré la période d'horloge de consigne $T_c$, qui est la période attendue, la période d'horloge réelle $T_i$ pour un cycle d'horloge, et l'écart $\Delta_i$.

Le signal d'horloge d'émission réel $S_H$ est illustré en trait plein sur la figure 2.

La période d'horloge d'émission effective associée train binaire initial Si est mesurée par un module de mesure d'horloge 10, en utilisant une horloge de référence 12 de fréquence largement supérieure à la fréquence d'horloge d'émission, comme expliqué plus en détail ci-après.

Par exemple, la fréquence d'horloge de l'horloge de référence est de 100 Mégahertz (MHz), alors que la fréquence nominale est de l'ordre de 32 kilohertz (kHz).

Dans un mode de réalisation, l'horloge de référence 12 est à l'intérieur de l'équipement émetteur 2.

Dans une variante, l'horloge de référence 12 est externe à l'équipement émetteur 2.

Le module de mesure d'horloge 10 permet de mesurer l'écart, en valeur moyenne, entre la période d'horloge de consigne $T_c$ et la valeur moyenne de la période d'horloge d'émission, notée $T_m$, et appelée simplement période moyenne d'émission par la suite.

Une information représentative de la période moyenne d'émission d'une séquence de données d'un train binaire est insérée dans un champ de données réservé d'une trame encapsulant ces données du train binaire.

Une information additionnelle permettant de restituer un train binaire $R_i$ de même durée totale est ajoutée, comme expliqué plus en détail ci-après.

Le deuxième équipement récepteur 4 reçoit la trame Di, et les données binaires de la séquence sont mémorisées temporairement dans une mémoire tampon 20.

L'équipement récepteur 4 comporte un module 22 de génération d'horloge de restitution qui met en œuvre l'extraction des informations de valeur moyenne de la période d'horloge d'émission et des informations additionnelles du champ dédié de la trame reçue.

Ces informations sont utilisées pour générer une fréquence d'horloge de restitution ayant une période d'horloge de restitution associée, égale en moyenne à la valeur moyenne de la période d'horloge d'émission, en utilisant un compteur cadencé sur une horloge de référence 24.

L'horloge de référence 24 est de même fréquence de référence que l'horloge de référence 12 associée à l'équipement émetteur, par exemple 100 MHz.

Dans un mode de réalisation, l'horloge de référence 24 est à l'intérieur de l'équipement récepteur 4.

Dans une variante, l'horloge de référence 24 est externe à l'équipement récepteur 4.

Dans un mode de réalisation, une seule horloge de référence externe remplace les deux horloges de référence 12, 24.

Le train binaire $R_i$ est restitué, à la fréquence d'horloge de restitution, par le module d'échantillonnage 26 de l'équipement récepteur 4.

La figure 3 est un synoptique des principales étapes mises en œuvre dans l'équipement émetteur dans un mode de réalisation.

Les étapes du procédé sont mises en œuvre par un dispositif programmable intégré dans l'équipement émetteur, comprenant un processeur de calcul, par exemple un circuit logique programmable de type FPGA.

Lors d'une première étape 30, le nombre de coups d'horloge de référence entre fronts montants successifs du signal d'horloge du train binaire Si à traiter est calculé.

On obtient la période d'horloge $T_k$ de chaque échantillon k de la séquence.

La période d'horloge de consigne $T_c$ étant connue et mémorisée, lors de l'étape 32 on obtient l'écart $\Delta_k = T_k - T_c$. La valeur d'écart peut être positive ou négative.

Les valeurs d'écarts obtenues sont accumulées et sommées à l'étape 34 :

$$S_k = \sum_{j=1}^{k} \Delta_j$$

Une fois les valeurs d'écart entre période d'horloge de consigne et période d'horloge réelle obtenues pour les n cycles considérés, une division entière est mise en œuvre à l'étape 36 pour obtenir la valeur moyenne des écarts. Le nombre n est le nombre de cycles dans un datagramme, donc le nombre de bits dans un datagramme.

$$\Delta_m = S_n / n$$

L'opération de division entière fournit également un reste $r_m$, qui peut être soit nul, soit une valeur entière positive ou négative, définie par la formule :

$$S_n = n \times \Delta_m + r_m$$

Avantageusement, l'utilisation de la somme des écarts et l'application de la division sur la somme des écarts permet d'économiser des ressources calculatoires dans le calcul de la division.

Par exemple, lorsque la fréquence nominale est de 32kHz, et on considère une tolérance de +/- 10% par rapport à la fréquence nominale, pour une taille de séquence n=128 bits, le calcul de la moyenne des périodes d'horloge nécessiterait un numérateur de 19 bits, alors que le calcul de la moyenne des écarts nécessite un numérateur de 15 bits.

La période d'horloge moyenne est obtenue ensuite à l'étape 38 par le calcul, en additionnant la valeur moyenne des écarts obtenue, qui peut être positive ou négative, à la période de consigne :

$$T_m = T_c + \Delta_m$$

En effet, pour chaque cycle d'horloge correspondant à un échantillon k on a, comme expliqué ci-dessus : $T_k = T_c + \Delta_k$

La période moyenne est donnée par :

$$T_m = \frac{1}{n} \sum_{k=1}^{n} T_k = \frac{1}{n} (n \times T_c + \sum_{k=1}^{n} \Delta_k) = T_c + \Delta_m$$

Une première information permettant d'obtenir la période d'horloge moyenne est la valeur $T_m$ calculée.

Lors de l'étape 40 de formatage des données de transmission, cette première information est insérée dans un champ adéquat de la trame à transmettre.

Cette première information permettra de restituer la fréquence d'horloge moyenne et la valeur moyenne de la période d'horloge d'émission au niveau de l'équipement récepteur.

Une information additionnelle constituée du reste $r_m$ et du signe du reste $r_m$ est également insérée dans la trame à transmettre.

Avantageusement, la transmission de cette information additionnelle, en plus de l'information permettant d'obtenir la période d'horloge moyenne, permettra de restituer dans l'équipement récepteur un signal d'horloge ayant exactement la même durée, pour le nombre n de cycles, que le signal d'horloge d'émission, sans transmission d'un signal d'horloge associé au train binaire $S_i$.

Par exemple, on utilise un champ utilisateur de 32 bits de la trame Ethernet pour la transmission des informations $T_m$, $r_m$ et signe de $r_m$.

Dans un exemple de réalisation, le champ utilisateur comporte 32 bits, et les 11 bits de poids fort (MSB) sont utilisés pour le reste $r_m$ encodé sur 10 bits et son signe encodé sur 1 bit, les autres 21 bits étant utilisés pour la valeur moyenne de la période d'horloge d'émission $T_m$ calculée, comme illustré schématiquement à la figure 4.

Avantageusement, la transmission de la valeur moyenne de la période d'horloge d'émission $T_m$ est utilisable par tout récepteur.

En variante, dans un cas de figure où le ou chaque récepteur aurait connaissance de la période de consigne Tc, la valeur moyenne des écarts $\Delta_m$ obtenue est transmise, avec son signe.

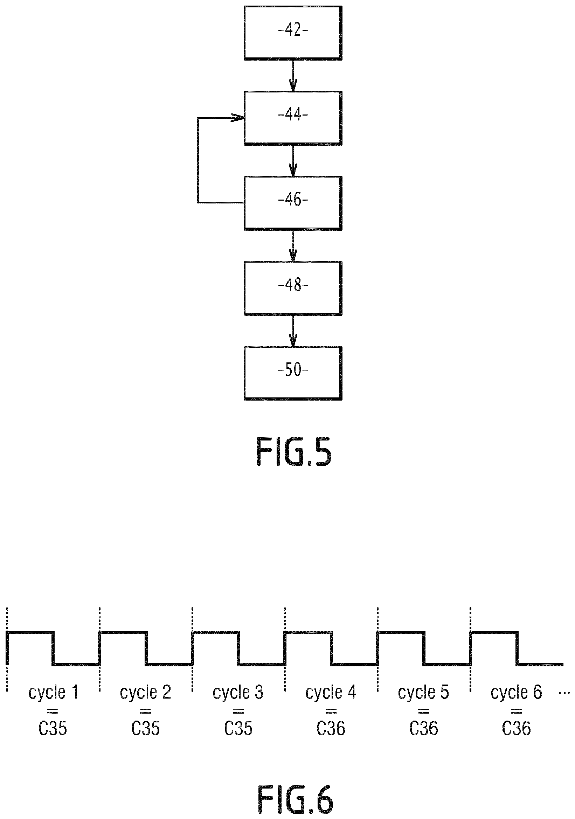

La figure 5 est un synoptique des principales étapes mises en œuvre dans l'équipement récepteur dans un mode de réalisation.

Les étapes du procédé sont mises en œuvre par un dispositif programmable intégré dans l'équipement récepteur, comprenant un processeur de calcul, par exemple un circuit logique programmable de type FPGA.

Lors d'une étape 42, les informations de période d'horloge moyenne $T_m$, ainsi que les informations additionnelles contenant le reste $r_m$ de la division et son signe sont extraites du champ utilisateur de la trame reçue et mémorisées.

Lors de l'étape 44, un cycle d'horloge de période de d'horloge égale à $T_m$ est généré pour l'échantillon courant.

Lors de l'étape 46, il est vérifié si la valeur absolue $r'_m$ du reste mémorisé est supérieure à 0.

Si tel est le cas, l'étape 46 est suivie d'une étape 48 d'ajustement de la durée du cycle courant d'un coup d'horloge de référence, en plus ou en moins selon que le signe du reste est positif ou négatif, par rapport à la période d'horloge moyenne.

L'étape 48 est suivie d'une étape 50 de décrémentation de 1 de la valeur absolue du reste $r'_m$ mémorisée.

Lorsque la valeur absolue du reste mémorisée est nulle ($r'_m = 0$), alors l'étape 46 est suivie de l'étape 44 précédemment décrite.

Ainsi, pour un cycle d'horloge courant, la période de d'horloge restituée est soit égale à la période d'horloge moyenne $T_m$, soit égale à $T_m-1$ ou à $T_m+1$, autrement dit plus courte ou plus longue d'un coup de l'horloge de référence, en fonction du signe du reste $r_m$.

Le train binaire $R_i$ est restitué selon les cadences des cycles restituées lors des étapes 44 ou 48 décrites ci-dessus.

Il est à noter qu'avec le procédé de restitution décrit ci-dessus, même si la variation de l'horloge d'émission n'est pas fidèlement reproduite par l'équipement récepteur à chaque cycle d'horloge, la valeur moyenne de la période d'émission est respectée, ainsi que la durée totale de la séquence d'échantillons du train binaire initial.

Par exemple, si on considère une séquence de n=128 cycles, de période d'horloge d'émission moyenne égale à $T_m=C36$ en hexadécimal (soit 3126 en décimal), la valeur de la période indiquant le nombre de coups d'horloge de référence (à fréquence de référence 100 MHz) d'un cycle d'horloge d'émission, et un reste négatif de $r_m=-4$, on obtient des cycles tels qu'illustrés schématiquement à la figure 6 : les quatre premiers cycles ont une valeur de période égale à C35, c'est-à-dire diminuée d'un cycle d'horloge de référence par rapport à la période d'horloge moyenne $T_m$, et les cycles d'horloge suivants ont une période $T_m$ égale à la période moyenne.

Ainsi, la durée totale de la séquence restituée est égale à la durée totale de la séquence initialement émise, et les séquences émise et restituée ont la même fréquence moyenne.

L'implémentation du procédé de l'invention décrite ci-dessus a l'avantage de la simplicité.

En variante, on ajuste la valeur de période d'autres cycles, par exemple des derniers cycles ou alors d'un cycle sur P, avec une fréquence P donnée, par exemple un cycle sur 2, un cycle sur 3.

## Revendications

1. Procédé de numérisation de train binaire continu dans un système de communication non synchrone dudit train binaire, pour une transmission entre un premier équipement émetteur (2) et un deuxième équipement récepteur (4), le train binaire continu initial étant numérisé par le premier équipement émetteur en utilisant un signal d'horloge d'émission en une séquence de données binaires à transmettre à une fréquence nominale correspondant à une période d'horloge de consigne, les données binaires à transmettre étant encapsulées dans au moins une trame de transport, ladite trame étant envoyée au deuxième équipement récepteur (4), le procédé, mis en œuvre par un processeur du premier équipement émetteur (2), le signal d'horloge d'émission étant défini par des cycles d'horloge d'émission, le procédé étant **caractérisé en ce qu'**il comporte des étapes consistant à :

   - estimer (30-38) une valeur moyenne de période d'horloge d'émission de la séquence de données, comportant l'estimation (30) de la durée de chaque cycle d'horloge d'émission de la séquence de données binaires à transmettre et le calcul (32) d'un écart entre la période d'horloge de consigne et ladite durée calculée pour chaque cycle d'horloge d'émission,
   - insérer (40) dans un champ prédéterminé de la trame de transport une information représentative de la période moyenne de la période d'horloge d'émission, permettant de restituer, dans le deuxième équipement récepteur (4), ladite valeur moyenne de période d'horloge d'émission de la séquence de données.

2. Procédé de numérisation selon la revendication 1, **caractérisé en ce qu'**il comporte le calcul (36) d'une valeur moyenne desdits écarts et l'estimation (38) de la valeur moyenne de période d'horloge d'émission en fonction de la période d'horloge de consigne et de ladite valeur moyennes des écarts.

3. Procédé de numérisation selon la revendication 2, **caractérisé en ce que** le calcul (36) de la valeur moyenne des écarts est effectué par une division entière de la somme desdits écarts par le nombre de données binaires de ladite séquence de données binaires à transmettre, fournissant une valeur de reste de la division et un signe dudit reste.

**4.** Procédé de numérisation selon la revendication 3, **caractérisé en ce qu'**une information additionnelle comportant ladite valeur de reste de la division et le signe dudit reste est insérée dans ladite trame de transport.

**5.** Equipement émetteur d'un système de communication **caractérisé en ce qu'**il est adapté à mettre en œuvre un procédé de numérisation de train binaire continu selon l'une quelconque des revendications 1 à 4.

**6.** Procédé de restitution de train binaire continu dans un système de communication non synchrone dudit train binaire , entre un premier équipement émetteur (2) et un deuxième équipement récepteur (4), le train binaire continu initial étant numérisé par un procédé de numérisation selon l'une quelconques des revendications 1 à 4 mis en œuvre dans le premier équipement émetteur (2), le procédé de restitution, mis en œuvre par un processeur du deuxième équipement récepteur (4), étant **caractérisé en ce qu'**il comporte des étapes consistant à:

- extraire (42) d'un champ prédéterminé d'une trame de transport reçue une information représentative de la période moyenne de la période d'horloge d'émission, permettant de restituer la valeur moyenne de période d'horloge d'émission de la séquence de données, comportant l'extraction de ladite trame de transport d'une information additionnelle permettant d'obtenir un train binaire restitué de même durée totale que le train binaire transmis par le premier équipement émetteur.
- générer (44) un signal d'horloge de restitution dont chaque cycle a une durée égale à ladite valeur moyenne de période d'horloge d'émission,
- restituer un train binaire avec un cadencement donné par ledit signal d'horloge de restitution.

**7.** Procédé de restitution selon la revendication 6, **caractérisé en ce que** ladite information additionnelle comporte une valeur de reste de division entière d'une somme des écarts entre la période d'horloge de consigne et une durée calculée pour chaque cycle d'horloge d'émission par le nombre de données binaires de ladite séquence de données binaires à transmettre, et un signe dudit reste.

**8.** Procédé de restitution selon la revendication 7, **caractérisé en ce qu'**il comporte un ajustement (48) d'au moins une durée de cycle d'horloge de restitution dudit deuxième équipement récepteur en fonction de la valeur dudit reste et du signe dudit reste.

**9.** Equipement récepteur d'un système de communication **caractérisé en ce qu'**il est adapté à mettre en œuvre un procédé de restitution de train binaire continu selon l'une quelconque des revendications 6 à 8.

**Patentansprüche**

**1.** Verfahren zum Digitalisieren eines kontinuierlichen Bitstroms in einem nicht mit dem Bitstrom synchronen Kommunikationssystem für die Übertragung zwischen einer ersten Sendeeinrichtung (2) und einer zweiten Empfangseinrichtung (4), wobei der anfängliche kontinuierliche Bitstrom von der ersten Sendeeinrichtung unter Verwendung eines Sendetaktsignals in eine Sequenz von binären Daten, die bei einer nominalen Frequenz entsprechend einer Solltaktperiode zu senden ist, digitalisiert wird, wobei die zu sendenden binären Daten in mindestens einem Transportrahmen eingeschlossen sind, wobei der Rahmen an die zweite Empfangseinrichtung (4) gesendet wird, das Verfahren von einem Prozessor der ersten Sendeeinrichtung (2) durchgeführt wird und das Sendetaktsignal durch Sendetaktzyklen definiert ist, wobei das Verfahren **dadurch gekennzeichnet ist, dass** es Schritte aufweist, die darin bestehen:

- Schätzen (30 bis 38) eines Mittelwertes der Sendetaktperiode der Datensequenz, das die Schätzung (30) der Dauer jedes Sendetaktzyklus der zu übertragenden binären Datensequenz und die Berechnung (32) einer Abweichung zwischen der Solltaktperiode und der für jeden Sendetaktzyklus berechneten Dauer aufweist,
- Einfügen (40) in ein vorbestimmtes Feld des Transportrahmens einer Information, die für die gemittelte Periode der Sendetaktperiode repräsentativ ist, wodurch in der zweiten Empfangseinrichtung (4) der Mittelwert der Sendeempfangsperiode der Datensequenz wiederhergestellt werden kann.

**2.** Digitalisierungsverfahren nach Anspruch 1, **dadurch gekennzeichnet, dass** es die Berechnung (36) eines Mittelwertes der Abweichungen und die Schätzung (38) des Mittelwertes der Sendetaktperiode abhängig von der Solltaktperiode und dem Mittelwert der Abweichungen aufweist.

**3.** Digitalisierungsverfahren nach Anspruch 2, **dadurch gekennzeichnet, dass** die Berechnung (36) des Mittelwertes der Abweichungen durch eine ganzzahlige Teilung der Summe der Abweichungen durch die Anzahl der binären Daten der zu übertragenden binären Datensequenz durchgeführt wird, wobei ein Wert des Restes der Teilung und ein Vorzeichen des Restes geliefert wird.

**4.** Digitalisierungsverfahren nach Anspruch 3, **dadurch gekennzeichnet, dass** eine zusätzliche Information, die den Wert des Restes der Teilung und das Vorzeichen des Restes aufweist, in den Transportrahmen eingefügt wird.

**5.** Sendeeinrichtung eines Kommunikationssystems, **dadurch gekennzeichnet, dass** sie angepasst ist, ein Verfahren zum Digitalisieren eines kontinuierlichen Bitstroms nach einem beliebigen der Ansprüche 1 bis 4 durchzuführen.

**6.** Verfahren zum Wiederherstellen eines kontinuierlichen Bitstroms in einem nicht mit dem Bitstrom synchronen Kommunikationssystem zwischen einer ersten Sendeeinrichtung (2) und einer zweiten Empfangseinrichtung (4), wobei der anfängliche kontinuierliche Bitstrom durch ein Digitalisierungsverfahren nach einem beliebigen der Ansprüche 1 bis 4 digitalisiert wird, das in der ersten Sendeeinrichtung (2) durchgeführt wird, wobei das Wiederherstellungsverfahren, das von einem Prozessor der zweiten Empfangseinrichtung (4) durchgeführt wird, **dadurch gekennzeichnet ist, dass** es die Schritte aufweist, die darin bestehen:

- Extrahieren (42) aus einem vorbestimmten Feld eines empfangenen Transportrahmens einer Information, die für die gemittelte Periode der Sendetaktperiode repräsentativ ist und eine Wiederherstellung des Mittelwertes der Sendetaktperiode der Datensequenz gestattet, wobei die Extraktion einer zusätzlichen Information aus dem Transportrahmen umfasst ist, die den Erhalt eines wiederhergestellten Bitstroms mit derselben Gesamtdauer wie der des von der ersten Sendeeinrichtung gesendeten Bitstroms ermöglicht,
- Erzeugen (44) eines Wiederherstellungstaktsignals, dessen jeweiliger Zyklus eine Dauer gleich dem Mittelwert der Sendetaktperiode aufweist,
- Wiederherstellen eines Bitstroms mit einem Zeitablauf, der von dem Wiederherstellungstaktsignal gegeben wird.

**7.** Wiederherstellungsverfahren nach Anspruch 6, **dadurch gekennzeichnet, dass** die zusätzliche Information einen Wert des Rests der ganzzahligen Teilung einer Summe der Abweichungen zwischen der Solltaktperiode und einer für jeden Sendetaktzyklen berechneten Dauer durch die Anzahl der binären Daten der zu übertragenden binären Datensequenz und einem Vorzeichen des Rests aufweist.

**8.** Wiederherstellungsverfahren nach Anspruch 7, **da-**

**durch gekennzeichnet, dass** es eine Anpassung (48) mindestens einer Dauer des Wiederherstellungstaktsignals der zweiten Empfangseinrichtung abhängig von dem Wert des Rests und dem Vorzeichen des Rests aufweist.

**9.** Empfangseinrichtung eines Kommunikationssystems, **dadurch gekennzeichnet, dass** es angepasst ist, ein Verfahren zum Wiederherstellen eines kontinuierlichen Bitstroms nach einem beliebigen der Ansprüche 6 bis 8 durchzuführen.

**Claims**

**1.** A method for digitizing a continuous bit stream in communication system that is nonsynchronous of said bit stream, for a transmission between a first transmitting apparatus (2) and a second receiving apparatus (4), the initial continuous bit stream being digitized by the first transmitting apparatus by using an emission clock signal into a binary data sequence to be transmitted at a nominal frequency corresponding to a set clock period, the binary data to be transmitted being encapsulated in at least one transport frame, said frame being sent to the second receiving apparatus (4), the method, implemented by a processor of the first transmitting apparatus (2), the emission clock signal being defined by emission clock cycles, the method being **characterized in that** it includes steps consisting of:

- estimating (30-38) a mean emission clock period value of the data sequence, comprising estimating (30) the duration of each emission clock cycle of the binary data sequence to be transmitted and calculating (32) a deviation between the set clock period and said calculated duration for each emission clock cycle,
- inserting (40), in a predetermined field of the transport frame, information representative of the mean period of the emission clock period, making it possible to restore, in the second receiving apparatus (4), said mean emission clock period value of the data sequence.

**2.** The digitization method according to claim 1, **characterized in that** it includes calculating (36) a mean value of said deviations and estimating (38) the mean emission clock period value based on the set clock period and said mean value of the deviations.

**3.** The digitization method according to claim 2, **characterized in that** the calculation (36) of the mean value of the deviations is carried out by an Euclidian division of the sum of said deviations by the number of binary data of said binary data sequence to be transmitted, providing a remainder value of the division and a sign of said remainder.

4. The digitization method according to claim 3, **characterized in that** additional information including said remainder value of the division and the sign of said remainder is inserted into said transport frame.

5. A transmitting apparatus of a communication system, **characterized in that** it is adapted to carry out a continuous bit stream digitization method according to any one of claims 1 to 4.

6. A method for restoring a continuous bit stream in a communication system that is nonsynchronous of said bit stream, between a first transmitting apparatus (2) and a second receiving apparatus (4), the initial continuous bit stream being digitized by a digitization method according to any one of claims 1 to 4 implemented in the first transmitting apparatus (2), the restoring method, implemented by a processor of the second receiving apparatus (4), being **characterized in that** it includes steps consisting of:

   - extracting (42), from a predetermined field of the transport frame, information representative of the mean period of the emission clock period, making it possible to restore the mean emission clock period value of the data sequence; comprising extracting, from said transport frame, additional information making it possible to obtain a restored bit stream with the same total duration as the bit stream transmitted by the first transmitting apparatus,
   - generating (44) a restore clock signal, each cycle of which has a duration equal to said mean emission clock period value,
   - restoring a bit stream with a pace given by said restore clock signal.

7. The restoring method according to claim 6, **characterized in that** said additional information includes an Euclidian division remainder value of a sum of the deviations between the set clock period and a duration calculated for each emission clock cycle by the number of binary data of said binary data sequence to be transmitted, and a sign of said remainder.

8. The restoring method according to claim 7, **characterized in that** it includes an adjustment (48) of at least one restore clock cycle duration of said second receiving apparatus based on the value of said remainder and the sign of said remainder.

9. A receiving apparatus of a communication system, **characterized in that** it is adapted to carry out a continuous bit stream restoring method according to any one of claims 6 to 8.

FIG.1

$T_i$: Période réelle

$S_H$

$T_C$: Période attendue

$\Delta_i$: Ecart de période

# FIG.2

-30-

-32-

-34-

-36-

-38-

-40-

# FIG.3

$r_m$      Signe $r_m$      $T_m$

··········

32 bits

# FIG.4

-42-

-44-

-46-

-48-

-50-

# FIG.5

cycle 1
=
C35

cycle 2
=
C35

cycle 3
=
C35

cycle 4
=
C36

cycle 5
=
C36

cycle 6  ···
=
C36

# FIG.6

**RÉFÉRENCES CITÉES DANS LA DESCRIPTION**

**Documents brevets cités dans la description**

- US 2013083809 A1